# EUROPÄISCHE PATENTANMELDUNG

(11) **EP 2 722 535 A2**
(43) Veröffentlichungstag der Anmeldung: **23.04.2014**
(21) Anmeldenummer: 13186622.0
(22) Anmeldetag: 30.09.2013
(51) Int. Cl.: F16B 19/10

(54) **Blindniet sowie Bauteilverbindung mit einem Blindniet**

(30) Priorität: 18.10.2012 DE 102012219008
(71) Anmelder: Bayerische Motoren Werke Aktiengesellschaft, 80809 München (DE)
(72) Erfinder: Ernst, Mario, 84144 Geisenhausen (DE); Weinmann, Robert, 87719 Mindelheim (DE)

(57) **Zusammenfassung**

Blindniet (1), mit einem hohlen Hülsenabschnitt (2), einem hohlen Kopfabschnitt (4) und einem Zugdorn (5), welcher sich im nicht gesetzten Zustand des Blindniets durch den Hülsenabschnitt und den Kopfabschnitt erstreckt und aus dem Kopfabschnitt heraussteht. Der Kopfabschnitt weist einen Klemmkopf (4) auf, der ganz oder teilweise die Form einer Kugel oder eine kugelähnliche Form oder die Form eines T-Bolzens oder eines Gewindestifts oder einer Gewindebuchse oder eines glatten zylindrischen Stifts hat.

## Beschreibung

Die vorliegende Erfindung betrifft einen Blindniet gemäß dem Oberbegriff des Patentanspruches 1 sowie eine Bauteilverbindung mit einem Blindniet gemäß den Merkmalen des Patentanspruches 4.

Ein Blindniet ist z.B. aus der CH 401 592 B bekannt.

Aus der WO 2012031652 A1 ist eine Bauteilverbindung bekannt, mit einem ersten Bauteil, welches ein von dem ersten Bauteil abstehendes männliches Fixierelement aufweist und einem zweiten Bauteil, das ein zur Aufnahme des männlichen Fixierelements vorgesehenes weibliches Fixierelement aufweist. Das männliche Fixierelement ist in einer Einführrichtung klemmend in das weibliche Fixierelement eingeführt, wodurch die beiden Bauteile lösbar miteinander verbunden sind. Das männliche Fixierelement weist einen Klemmkopf und einen Fußbereich auf, der z. B. als Stanzniet ausgebildet sein kann und formschlüssig mit dem zweiten Bauteil verbunden sein kann.

Aufgabe der Erfindung ist es, einen Blindniet zu schaffen, der in einfacher Weise die Herstellung von (klemmenden) Bauteilverbindungen ermöglicht.

Diese Aufgabe wird durch die Merkmale des Patentanspruches 1 gelöst. Eine entsprechende Bauteilverbindung beschreibt der Patentanspruch 4. Ausgangspunkt der Erfindung ist ein Blindniet mit einem hohlen Hülsenabschnitt und einem hohlen Kopfabschnitt. Der Blindniet weist ferner einen Zugdorn (Nietbolzen) auf, der sich im nicht gesetzten Zustand des Blindniets durch den Hülsenabschnitt und den Kopfabschnitt hindurch erstreckt und aus dem Kopfabschnitt heraussteht. An dem dem Kopfabschnitt abgewandten Ende des Zugdorns ist ein Zugkopf vorgesehen. Durch Ziehen am Zugdorn kann eine Kraft auf den Hülsenabschnitt ausgeübt werden, welche den Hülsenabschnitt dauerhaft plastisch verformt.

Der Kopfabschnitt des Blindniets gemäß der Erfindung weist einen Funktionskopf auf, der so ausgebildet ist, dass er als ein in ein weibliches Fixierelement klemmend einführbarer Klemmkopf ausgebildet ist. Der Funktionskopf kann z.B. ganz oder teilweise die Form
- einer Kugel oder
- eine kugelähnliche Form oder
- die Form eines T-Bolzens oder
- eines Gewindestifts (z.B. mit einem metrischen Außengewinde oder einem Grobaußengewinde versehen) oder
- einer Gewindebuchse oder
- eines glatten zylindrischen Stifts o. ä.
haben. Ein derartiger Blindniet kann zur Herstellung einer klemmenden Bauteilverbindung verwendet werden, wie sie z. B. in der eingangs beschriebenen WO 2012031652 A1 beschrieben ist.

Eine solche Bauteilverbindung weist ein erstes Bauteil auf, bei dem es sich beispielsweise um ein Fahrzeugbauteil, insbesondere um ein Fahrzeugkarosseriebauteil handeln kann, sowie ein von dem ersten Bauteil abstehendes männliches Fixierelement. Die Bauteilverbindung weist ferner ein zweites Bauteil auf, bei dem es sich ebenfalls um ein Fahrzeugbauteil, insbesondere um ein Fahrzeugkarosseriebauteil handeln kann, welches ein zur Aufnahme des männlichen Fixierelements vorgesehenes weibliches Fixierelement aufweist. Das weibliche Fixierelement kann beispielsweise durch ein Durchgangsloch gebildet sein. Von dem Durchgangsloch kann ein Klemmkrägen abstehen, der im zusammengesteckten Zustand, d.h. wenn das männliche Fixierelement in einer Einführrichtung in das weibliche Fixierelement klemmend eingeführt ist, von außen her gegen das männliche Fixierelement drückt. Der Klemmkragen kann sich über den gesamten Umfang erstrecken oder nur über einen Umfangsabschnitt. Er kann durch Umbiegen, Umbördeln o.ä. von Material des zweiten Bauteils hergestellt sein. Alternativ dazu können entlang des Umfangs des Durchgangslochs voneinander beabstandet auch mehrere solcher Klemmkrägen abstehen.

Wie bereits erwähnt, kann das männliche Fixierelement durch einen Blindniet, wie er oben beschrieben ist, gebildet sein. Der hülsenartige Abschnitt des Blindniets kann in ein in dem ersten Bauteil vorgesehenes Durchgangsloch eingeführt und in an sich bekannter Weise so plastisch verformt werden bzw. sein, dass der Blindniet formschlüssig mit dem ersten Bauteil verbunden ist. Das männliche Fixierelement, welches in das in dem zweiten Bauteil vorgesehene weibliche Fixierelement eingeklemmt ist, ist gemäß der Erfindung durch den Funktionskopf des Blindniets gebildet.

Der Zugdorn eines solchen Blindniets kann beispielsweise aus Kunststoff, Aluminium, Stahl, Edelstahl oder einem anderen Material hergestellt sein. Der Hülsenabschnitt und der Funktionskopf können jeweils ebenfalls z. B. aus Kunststoff, Aluminium, Stahl, Edelstahl oder einem anderen Material hergestellt sein.

Derartige Blindniete können insbesondere bei Bauteilen Verwendung finden, die aus einem Faserverbundwerkstoff hergestellt sind (insbesondere in sogenannte kohlefaserverstärkte Bauteile). Bei der erfindungsgemäßen Bauteilverbindung kann es sich z.B. um eine sogenannte "Mischbau-Verbindung" handeln, d. h. um eine Bauteilverbindung, bei der die beiden Bauteile aus unterschiedlichen Materialien bestehen. Eines der Bauteile kann beispielsweise aus einem Metall oder einer Metalllegierung bestehen. Das andere Bauteil kann beispielsweise aus einem Kunststoffmaterial, insbesondere aus einem faserverstärkten Kunststoffmaterial bestehen.

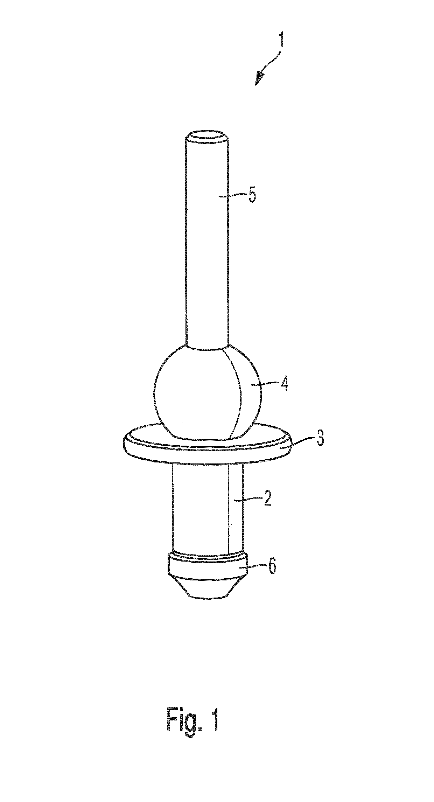

Im Folgenden wird die Erfindung im Zusammenhang mit der Zeichnung näher erläutert. Die einzige Figur 1 zeigt einen Blindniet gemäß der Erfindung.

Figur 1 zeigt einen Blindniet mit einem hohlen, im Wesentlichen kreiszylindrischen Hülsenabschnitt 2, von dessen oberem Ende radial nach außen ein im Wesentlichen tellerartiger Rand 3 absteht. Der Blindniet weist oberhalb des tellerartigen Rands 3 einen mit einer Durchgangsbohrung versehenen kugelartigen Kopfabschnitt 4 auf. Der Hülsenabschnitt 2, der tellerartige Rand 3 und der Kopfabschnitt 4 können einstückig hergestellt sein und sind von einem Zugdorn 5 durchsetzt, der hier (im nicht gesetzten Zustand des Blindniets 1) nach oben aus dem Kopfabschnitt 4 heraussteht.

Auf der dem Kopfabschnitt 4 abgewandten Seite des Zugdorns 5 ist ein Zugkopf 6 vorgesehen. Durch Ziehen am Zugdorn 5 kann der hülsenartige Abschnitt 2 plastisch verformt werden. Setzt man den Blindniet 1 mit seinem hülsenartigen Abschnitt 2 in eine Durchgangsbohrung eines ersten Bauteils (nicht dargestellt) ein, so kann durch Ziehen am Zugdorn 5 der hülsenartige Abschnitt 2 derart plastisch verformt werden, dass der Blindniet 1 dauerhaft fest formschlüssig mit dem ersten Bauteil verbunden ist. Bei Überschreiten einer konstruktiv vorgegebenen Zugkraft reißt der Zugdorn 5 in definierter Weise ab, so dass sich ein von dem ersten Bauteil (nicht dargestellt) abstehendes männliches Fixierelement ergibt, welches durch den Kopfabschnitt 4 gebildet ist.

Das männliche Fixierelement kann in ein an einem zweiten Bauteil (nicht dargestellt) vorgesehenes weibliches Fixierelement (z. B. Durchgangsloch) klemmend eingeführt werden. Dadurch kann in einfacher Weise zwischen zwei Bauteilen eine Klemmverbindung hergestellt werden.

Alternativ zu dem in Figur 1 gezeigten Ausführungsbeispiel kann der Zugkopf 6 als Funktions- oder Klemmkopf ausgebildet sein bzw. als Klemmkopf fungieren. Er kann z.B. ganz oder teilweise die Form einer Kugel oder eine kugelähnliche Form oder die Form eines T-Bolzens oder eines Gewindestifts oder einer Gewindebuchse oder eines glatten zylindrischen Stifts o. ä. haben. Wenn der Zugkopf als Klemmkopf ausgebildet ist, brauchen der Hülsenabschnitt 2, der tellerartige Rand 3 und der Kopfabschnitt 4 nicht unbedingt hohl ausgebildet und von einem Zugdorn durchsetzt sein. Der Blindniet kann vielmehr auch in eine Durchgangsbohrung eines Bauteils eingesetzt werden und, sofern der Kopfabschnitt 4 und der ebenfalls als Klemmkopf fungierende Zugkopf 6 von einander gegenüberliegenden Seiten des Bauteils zugänglich sind, kann der Blindniet auch ohne Zugdorn mittels geeigneter Werkzeuge plastisch verformt und formschlüssig mit dem Bauteil verbunden werden.

## Patentansprüche

1. Blindniet (1), mit
• einem Hülsenabschnitt (2),
• einem Kopfabschnitt (4) und
**dadurch gekennzeichnet, dass**
der Kopfabschnitt einen Klemmkopf (4) aufweist, der ganz oder teilweise die Form
• einer Kugel oder
• eine kugelähnliche Form oder
• die Form eines T-Bolzens oder
• eines Gewindestifts oder
• einer Gewindebuchse oder
• eines glatten zylindrischen Stifts
hat.

2. Blindniet (1), nach Anspruch 1, **dadurch gekennzeichnet, dass** der Hülsenabschnitt (2) und der Kopfabschnitt (4) hohl sind und sich im nicht gesetzten Zustand des Blindniets (1) durch den Hülsenabschnitt (2) und den Kopfabschnitt (4) ein Zugdorn (5) erstreckt, der aus dem Kopfabschnitt (4) heraussteht.

3. Blindniet (1) nach Anspruch 1 oder 2, **dadurch gekennzeichnet, dass** auf der dem Klemmkopf (4) abgewandten Seite des Zugdorns (5) ein Zugkopf (6) vorgesehen ist, der als Funktions- oder Klemmkopf ausgebildet ist.
Blindniet (1) nach Anspruch 3, **dadurch gekennzeichnet, dass** der durch den Zugkopf (6) gebildete Klemmkopf ganz oder teilweise die Form
• einer Kugel oder
• eine kugelähnliche Form oder
• die Form eines T-Bolzens oder
• eines Gewindestifts oder
• einer Gewindebuchse oder
• eines glatten zylindrischen Stifts
hat.

4. Bauteilverbindung, mit
- einem ersten Bauteil, insbesondere einem ersten Fahrzeugbauteil, das ein von dem ersten Bauteil abstehendes, männliches Fixierelement (4) aufweist,
- einem zweiten Bauteil, insbesondere einem zweiten Fahrzeugbauteil, das ein zur klemmenden Aufnahme des männlichen Fixierelements vorgesehenes weibliches Fixierelement aufweist, wobei das männliche Fixierelement in einer Einführrichtung in das weibliche Fixierelement eingeführt und darin eingeklemmt ist, wobei
**dadurch gekennzeichnet, dass**
das männliche Fixierelement durch den Kopfabschnitt (4) eines Blindniets (1) gemäß Anspruch 1 gebildet ist.
